# EUROPEAN PATENT APPLICATION

(11) **EP 3 783 314 A1**
(43) Date of publication of application: **24.02.2021**
(21) Application number: 20187382.5
(22) Date of filing: 23.07.2020
(51) Int. Cl.: G01C 21/34, G01C 21/36

(54) **SYSTEM AND METHOD FOR VEHICLE ROUTE SELECTION**

(30) Priority: 20.08.2019 US 201916545212
(71) Applicant: Delphi Technologies IP Limited, Saint Michael (BB)
(72) Inventor: ROTH, Gregory Thomas, Davison, Michigan 48423 (US)
(74) Representative: Delphi France SAS

(57) **Abstract**

A method (300, 400) for vehicle route selection includes identifying (302, 420) a plurality of routes based on a current location of a vehicle and a destination location. The method also includes determining (304) an energy cost for each of the plurality of routes. The method also includes determining (306) a time cost for each of the plurality of routes. The method also includes determining (308, 428) a total cost for each of the plurality of routes using the energy cost and the time cost for each respective route of the plurality of routes. The method also includes providing (310,430), to an occupant of the vehicle, the plurality of routes and the total cost for each respective route of the plurality of routes.

## Description

### TECHNICAL FIELD

This disclosure relates to vehicle route selection, and in particular to systems and methods for selecting a vehicle route from a plurality of potential vehicle routes based on a total cost of each of the plurality of routes.

### BACKGROUND

Vehicles, such as cars, trucks, sport utility vehicles, crossovers, mini-vans, commercial vehicles, military vehicles, or other suitable vehicles, include a powertrain system that includes, for example, a propulsion unit, a transmission, drive shafts, wheels, and other suitable components. The propulsion unit may include an internal combustion engine, a fuel cell, one or more electric motors, and the like. A hybrid vehicle may include a powertrain system comprising more than one propulsion unit. For example, a hybrid vehicle may include an internal combustion engine and an electric motor that cooperatively operate to propel the vehicle. The vehicle may also include a Plug-in Hybrid Electric Vehicle (PHEV) or a Battery Electric Vehicle (BEV).

An operator of the vehicle may interact with a computing device, such as personal computing device, a mobile computing device, or a computing device integrated into the vehicle, to select a route between the vehicle's current location (e.g., or other starting or initial location) and a desired destination location. For example, the operator may provide information (e.g., an address, global positioning coordinates, and the like) to the computing device indicating a starting (e.g., or initial location or origin) and the desired destination. Additionally, or alternatively, the current location of the vehicle may be determined by the computing device and the desired destination may be suggested or provided by the computing device (e.g., based on travel history, time of day, etc.) or the operator may provide the desired destination. The computing device may identify routes between a starting location or the vehicle's current location (e.g., determined using a global position system or other suitable system) and the desired destination and present the identified routes to the operator. Typically, an identified route is presented with additional information, such a total distance of the identified route or a total time to traverse the identified route.

### SUMMARY

This disclosure relates generally to vehicle route selection systems and methods.

An aspect of the disclosed embodiments is a method for vehicle route selection. The method includes identifying a plurality of routes based on a current location or a starting location of a vehicle and a destination location. The method also includes determining an energy cost for each of the plurality of routes. The method also includes determining a time cost for each of the plurality of routes. The method also includes determining a total cost for each of the plurality of routes using the energy cost and the time cost for each respective route of the plurality of routes. The method also includes providing, to an occupant of the vehicle, the plurality of routes and the total cost for each respective route of the plurality of routes.

Another aspect of the disclosed embodiments a vehicle route selection apparatus that includes a memory and a processor. The memory includes instructions executable by the processor to: identify a plurality of routes based on a current location or a starting location of a vehicle and a destination location; determine an energy cost for each of the plurality of routes; determine a time cost for each of the plurality of routes; determine a total cost for each of the plurality of routes using the energy cost and the time cost for each respective route of the plurality of routes; and provide, to an occupant of the vehicle, the plurality of routes and the total cost for each respective route of the plurality of routes.

Another aspect of the disclosed embodiments is a non-transitory computer-readable storage medium, comprising executable instructions that, when executed by a processor, facilitate performance of operations, including: identifying a plurality of routes based on a current location or a starting location of a vehicle and a destination location; determining an energy cost for each of the plurality of routes; determining a time cost for each of the plurality of routes; determining a total cost for each of the plurality of routes using the energy cost and the time cost for each respective route of the plurality of routes; and providing, to an occupant of the vehicle, the plurality of routes, the time cost for each respective route of the plurality of routes, and at least one route characteristic for each respective route of the plurality of routes.

These and other aspects of the present disclosure are provided in the following detailed description of the embodiments, the appended claims, and the accompanying figures.

### BRIEF DESCRIPTION OF THE DRAWINGS

The disclosure is best understood from the following detailed description when read in conjunction with the accompanying drawings. It is emphasized that, according to common practice, the various features of the drawings are not to-scale. On the contrary, the dimensions of the various features are arbitrarily expanded or reduced for clarity.
FIG. 1 generally illustrates a vehicle according to the principles of the present disclosure.
FIG. 2 generally illustrates a block diagram of a vehicle system according to the principles of the present disclosure.
FIG. 3 generally illustrates a route selection interface according to the principles of the present disclosure.
FIG. 4 is a flow diagram generally illustrating a vehicle route selection method according to the principles of the present disclosure.
FIG. 5 is a flow diagram generally illustrating an alternative vehicle route selection method according to the principles of the present disclosure.

### DETAILED DESCRIPTION

The following discussion is directed to various embodiments of the invention. Although one or more of these embodiments may be preferred, the embodiments disclosed should not be interpreted, or otherwise used, as limiting the scope of the disclosure, including the claims. In addition, one skilled in the art will understand that the following description has broad application, and the discussion of any embodiment is meant only to be exemplary of that embodiment, and not intended to intimate that the scope of the disclosure, including the claims, is limited to that embodiment.

Vehicles, such as cars, trucks, sport utility vehicles, crossovers, mini-vans, commercial vehicles, military vehicles, or other suitable vehicles, include a power train system that includes, for example, a propulsion unit, a transmission, drive shafts, wheels, and other suitable components. The propulsion unit may include an internal combustion engine, a fuel cell, one or more electric motors, and the like. A hybrid vehicle may include a powertrain system comprising more than one propulsion unit. For example, a hybrid vehicle may include an internal combustion engine, a battery, and an electric motor that cooperatively operate to propel the vehicle.

An operator of the vehicle may interact with a computing device, such as a mobile computing device, a personal computing device, or a computing device integrated into the vehicle, to select a route between the vehicle's current location (e.g., or a starting or initial location) and a desired destination location. For example, the operator may provide information (e.g., an address, global positioning coordinates, and the like) to the computing device indicating the desired destination. Alternatively, the computing device may suggest or provide a destination to the operator (e.g., based on travel history, time of day, etc.). The computing device may identify routes between the vehicle's current location (e.g., determined using a global position system or other suitable system) or a starting location (e.g., provided by the operator) and the desired destination and present the identified routes to the operator. Typically, an identified route is presented with additional information, such a total distance of the identified route or a total time to traverse the identified route.

However, the occupant of the vehicle may be concerned with other characteristics of the route, such as a fuel cost or consumption associated with each respective route, and electric cost or consumption associated with each respective route, a time cost associated with each respective route, a total cost associated with each respective route, other suitable characteristics, or a combination thereof. Accordingly, systems and methods, such as those described herein, configured to provide fuel cost, electric cost, time cost, total cost, and/or other suitable characteristics for each route of the plurality of routes, may be desirable.

In some embodiments, the systems and methods described herein may be configured to identify a plurality of routes based on a current location or other location (e.g., a starting location) of a vehicle and a destination location. The systems and methods described herein may also be configured to determine an energy cost for each of the plurality of routes. The systems and methods described herein may also be configured to determine a time cost for each of the plurality of routes. The systems and methods described herein may also be configured to determine a total cost for each of the plurality of routes using the energy cost and the time cost for each respective route of the plurality of routes. The systems and methods described herein may also be configured to provide, to an occupant of the vehicle, the plurality of routes and the total cost for each respective route of the plurality of routes

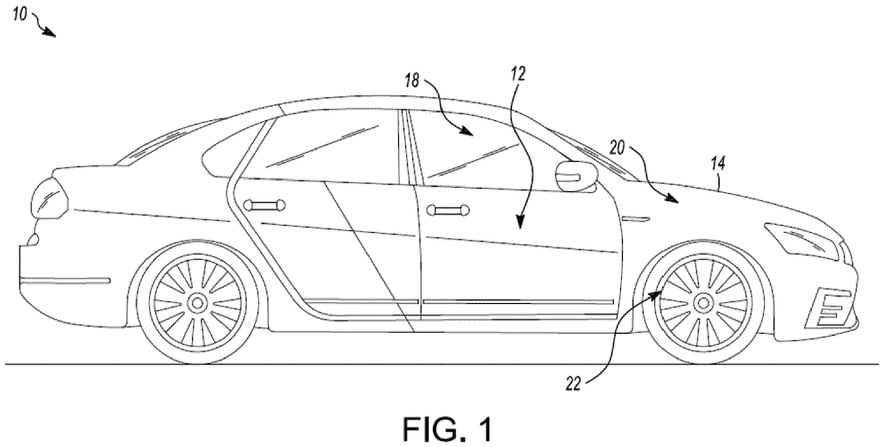

FIG. 1 generally illustrates a vehicle 10 according to the principles of the present disclosure. The vehicle 10 may include any suitable vehicle, such as a car, a truck, a sport utility vehicle, a mini-van, a crossover, any other passenger vehicle, any suitable commercial vehicle, any suitable military vehicle, or any other suitable vehicle. While the vehicle 10 is illustrated as a passenger vehicle having wheels and for use on roads, the principles of the present disclosure may apply to other vehicles, such as planes, boats, trains, drones, or other suitable vehicles. The vehicle 10 includes a vehicle body 12 and a hood 14. A portion of the vehicle body 12 defines a passenger compartment 18. Another portion of the vehicle body 12 defines the engine compartment 20. The hood 14 may be moveably attached to a portion of the vehicle body 12, such that the hood 14 provides access to the engine compartment 20 when the hood 14 is in a first or open position and the hood 14 covers the engine compartment 20 when the hood 14 is in a second or closed position.

The passenger compartment 18 may be disposed rearward of the engine compartment 20. The vehicle 10 may include any suitable propulsion system including an internal combustion engine, one or more electric motors (e.g., an electric vehicle), one or more fuel cells, a hybrid (e.g., a hybrid vehicle) propulsion system comprising a combination of an internal combustion engine, one or more electric motors, and/or any other suitable propulsion system. In some embodiments, the vehicle 10 may include a petrol or gasoline fuel engine, such as a spark ignition engine. In some embodiments, the vehicle 10 may include a diesel fuel engine, such as a compression ignition engine. The engine compartment 20 houses and/or encloses at least some components of the propulsion system of the vehicle 10. Additionally, or alternatively, propulsion controls, such as an accelerator actuator (e.g., an accelerator pedal), a brake actuator (e.g., a brake pedal), a steering wheel, and other such components are disposed in the passenger compartment 18 of the vehicle 10. The propulsion controls may be actuated or controlled by an operator of the vehicle 10 and may be directly connected to corresponding components of the propulsion system, such as a throttle, a brake, a vehicle axle, a vehicle transmission, and the like, respectively. In some embodiments, the propulsion controls may communicate signals to a vehicle computer (e.g., drive by wire) which in turn may control the corresponding propulsion component of the propulsion system.

In some embodiments, the vehicle 10 includes a transmission in communication with a crankshaft via a flywheel, clutch, or fluid coupling. In some embodiments, the transmission includes a manual transmission. In some embodiments, the transmission includes an automatic transmission. The vehicle 10 may include one or more pistons, in the case of an internal combustion engine or a hybrid vehicle, which cooperatively operate with the crankshaft to generate force, which is translated through the transmission to one or more axles, which turns wheels 22.

When the vehicle 10 includes one or more electric motors, a vehicle battery, and/or fuel cell provides energy to the electric motors to turn the wheels 22. In cases where the vehicle 10 includes a vehicle battery to provide energy to the one or more electric motors, when the battery is depleted, it may be connected to an electric grid (e.g., using a wall socket) to recharge the battery cells. Additionally, or alternatively, the vehicle 10 may employ regenerative braking which uses the one or more electric motors of the vehicle 10 as a generator to convert kinetic energy lost due to decelerating back into stored energy in the battery.

The vehicle 10 may include automatic vehicle propulsion systems, such as a cruise control, an adaptive cruise control module or mechanism, automatic braking control, other automatic vehicle propulsion systems, or a combination thereof. The vehicle 10 may be an autonomous or semi-autonomous vehicle, or other suitable type of vehicle. The vehicle 10 may include additional or fewer features than those generally illustrated and/or disclosed herein.

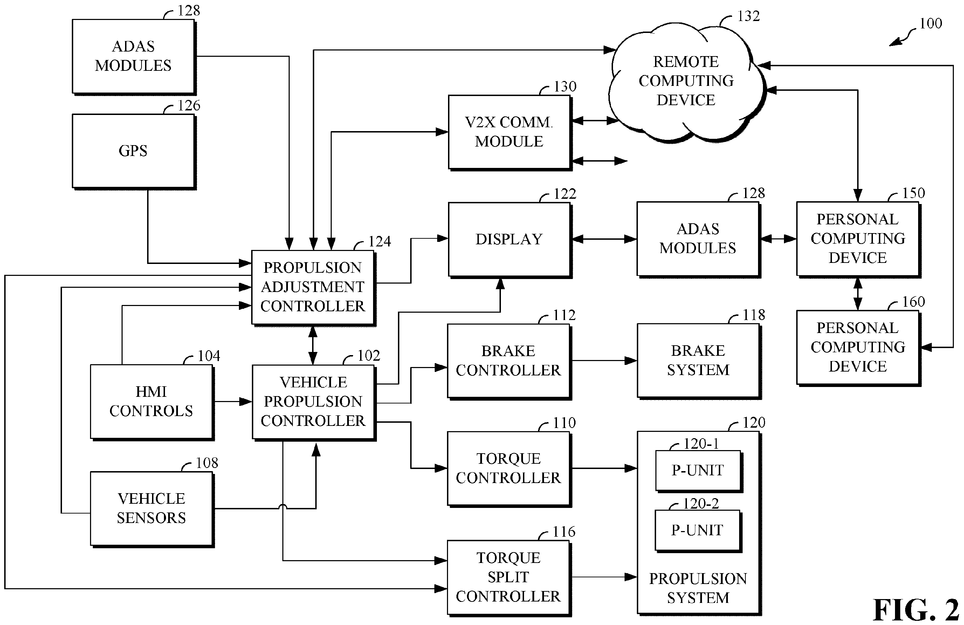

FIG. 2 generally illustrates a block diagram of a vehicle system 100 according to the principles of the present disclosure. The system 100 may be disposed within a vehicle, such as the vehicle 10. The system 100 may be configured to selectively control propulsion of the vehicle 10 and, in some embodiments, the system 100 is configured to determine profiles for a target vehicle speed and/or a target vehicle torque split based on various input information (e.g., route information, vehicle characteristic information, traffic information, other suitable information, or a combination thereof). The profiles of the target vehicle speed and/or the target vehicle torque split correspond to a vehicle speed at which the vehicle 10 achieves an optimum energy consumption efficiency with respect to a portion of a route being traversed by the vehicle 10.

In some embodiments, the system 100 may include a vehicle propulsion controller (VPC) 102, human machine interface (HMI) controls 104, vehicle sensors 108, a torque controller 110, a brake controller 112, a torque split controller 116, a brake system 118, a propulsion system 120, and a display 122. In some embodiment, the display 122 may include a portion of a dash or console of the vehicle 10, a navigation display of the vehicle 10, or other suitable displays of the vehicle 10. In some embodiments, the display 122 may be disposed on a computing device, such as a mobile computing device used by the operator. In some embodiments, the system 100 may include a propulsion adjustment controller (PAC) 124, a global position system (GPS) antenna 126 in communication with a mapping characteristics module (not shown), advanced driver assistance system (ADAS) modules 128, and a vehicle to other systems (V2X) communication module 130. The V2X communication module 130 may be configured to communication with other vehicles, other infrastructure (e.g., such as traffic infrastructure, mobile computing devices, and/or other suitable infrastructure), a remote computing device (e.g., the remote computing device 132), other suitable systems, or a combination thereof.

As will be described, the system 100 may be in communication with one or more remote computing devices 132. In some embodiments, at least some of the components of the system 100 may be disposed in a propulsion control module (PCM) or other onboard vehicle-computing device. For example, at least the PAC 124 and the VPC 102 may be disposed within the PCM. In some embodiments, the system 100 may be at least partially disposed within the PCM while other components of the system 100 are disposed on a standalone computing device having a memory that stores instructions that when executed by a processor cause the processor to carry out the operations of the components. For example, the PAC 124 may be disposed on a memory and executed by a processor. It should be understood that the system 100 may include any combination of computing devices, either disposed locally in the vehicle 10 and/or disposed remotely, including mobile computing devices, as will be described.

In some embodiments, the VPC 102 may include an automatic vehicle propulsion system. For example, the VPC 102 may include a cruise control mechanism, an adaptive cruise control mechanism, an automatic braking system, other suitable automatic vehicle propulsion system, or a combination thereof. Additionally, or alternatively, the VPC 102 may include or be a portion of an autonomous vehicle system that controls all or a portion of vehicle propulsion, steering, braking, safety, route management, other autonomous features, or a combination thereof. It should be understood that, while only limited components of the system 100 are illustrated, the system 100 may include additional autonomous components or other suitable components.

The VPC 102 is in communication with one or more human to machine interfaces (HMI) 104. The HMI controls 104 may include any suitable HMI. For example, the HMI controls 104 may include a plurality of switches disposed on a steering wheel of the vehicle 10, on the dash or console of the vehicle 10, or any other suitable location on the vehicle 10. In some embodiments, the HMI controls 104 may be disposed on a mobile computing device, such as a smart phone, tablet, laptop computer, or other suitable mobile computing device. In some embodiments, the operator of the vehicle 10 may interface with the HMI controls 104 to use the VPC 102 to control vehicle propulsion and/or other features of the VPC 102. For example, the operator may actuate an HMI switch of the HMI controls 104 disposed on the steering wheel of the vehicle 10. The HMI controls 104 may communicate a signal to the VPC 102. The signal may indicate a desired vehicle speed selected by the operator. The VPC 102 generates a torque demand corresponding to the desired vehicle speed and communicates the torque demand to a torque controller 110. The torque controller 110 is in communication with the propulsion system 120 and/or other vehicle propulsion systems of the vehicle 10. The torque controller 110 selectively controls the propulsion system 120 and/or the other vehicle propulsion systems using the torque demand to achieve the desired vehicle speed. The operator may increase or decrease the desired vehicle speed by actuating additional switches of the HMI controls 104. The VPC 102 may adjust the torque demand to achieve the increase or decrease in the desired vehicle speed.

The VPC 102 may continuously adjust the torque demand in order to maintain the desired vehicle speed. For example, the VPC 102 may be in communication with the vehicle sensors 108. The vehicle sensors 108 may include cameras, speed sensors, proximity sensors, other suitable sensors as will be described, or a combination thereof. The VPC 102 may receive a signal from the vehicle sensors 108 that indicates a current vehicle speed. The VPC 102 may adjust the torque demand to adjust the vehicle speed when the signal indicates that the current vehicle speed is different from the desired vehicle speed. For example, the vehicle 10 may traverse an incline that causes the vehicle 10 to reduce current vehicle speed (e.g., because the torque demand applied by the torque controller 110 is insufficient to maintain vehicle speed while on the incline). The VPC 102 may increase the torque demand in order adjust the current vehicle speed, thereby achieving the desired vehicle speed.

In some embodiments, such as when the VPC 102 includes an adaptive cruise control mechanism, the VPC 102 may adjust the torque demand based on the proximity of a lead vehicle (e.g., a vehicle immediately in front of the vehicle 10). For example, the VPC 102 may receive information from the vehicle sensors 108 indicating the presence of a lead vehicle. The information may be captured by the vehicle sensors 108 using cameras, proximity sensors, radar, the V2X communication module 130, other suitable sensors or input devices, or a combination thereof. The VPC 102 may determine whether to maintain the desired vehicle speed or increase or decrease the torque demand in order to increase or decrease the current vehicle speed. For example, the operator may indicate, using the HMI controls 104, to maintain pace with the lead vehicle while keeping a safe stopping distance between the vehicle 10 and the lead vehicle. The VPC 102 may selectively increase the torque demand if the lead vehicle is traveling faster than the vehicle 10 and may selectively decrease the torque demand if the lead vehicle is traveling slower relative to the vehicle 10.

The VPC 102 may bring the vehicle 10 to a complete stop when the lead vehicle comes to a complete stop. For example, the VPC 102 may be in communication with the brake controller 112 to send a plurality of signals over a period indicating to the brake controller 112 to control vehicle braking (e.g., the VPC 102 may bring the vehicle to a stop over a period so as not to suddenly stop the vehicle, however, in the case of a sudden stop of the lead vehicle, the VPC 102 brings the vehicle 10 to a sudden stop to avoid collision with the lead vehicle). The brake controller 112 may be in communication with the brake system 118. The brake system 118 may include a plurality of brake components that are actuated in response to the brake controller 112 implementing braking procedures based on the plurality of signals from the VPC 102.

In some embodiments, the VPC 102 may implement engine braking and/or braking via one or more electric motors through a regenerative braking system by adjusting the torque demand to allow the vehicle 10 to come to a stop without use of the brake system 118 or the VPC 102 may use a combination of regenerative braking and the brake system 118 to bring the vehicle 10 to a complete stop. In order to resume vehicle propulsion control, the operator indicates to resume vehicle propulsion control using the HMI controls 104 (e.g., the VPC 102 is not configured to resume vehicle propulsion control without interaction from the operator). In some embodiments, the vehicle 10 may include a higher level of automation including a higher level of propulsion control, as described, and may include suitable controls for bringing the vehicle 10 to a complete stop without interaction with the operator of the vehicle 10.

In some embodiments, the VPC 102 may provide the torque demand to the torque split controller 116. The torque split controller 116 may determine a torque split in order to utilize a first propulsion unit 120-1 and a second propulsion unit 120-2. In some embodiments, the first propulsion unit 120-1 may include an electric motor and the second propulsion unit 120-2 may include an internal combustion engine. It should be understood that while only an internal combustion engine and an electric motor are described, the vehicle 10 may include any hybrid combination of any suitable vehicle engines and motors. The torque split indicates a portion of the torque demand to be applied to the first propulsion unit 120-1 and a portion of the torque demand to be applied to the second propulsion unit 120-2. For example, the electric motor may be used alone for vehicle propulsion when the torque demand is below a threshold. However, the internal combustion engine may provide at least a portion of vehicle propulsion in order to assist the electric motor. The torque split controller 116 is in communication with the propulsion system 120, and accordingly, with the first propulsion unit 120-1 and the second propulsion unit 120-2, to apply the torque split.

In some embodiments, the VPC 102 includes a plurality of safety controls. For example, the VPC 102 may determine whether to increase or decrease the torque demand, thereby increasing or decreasing the desired vehicle speed or current vehicle speed, based on input from the safety controls. The safety controls may receive input from the vehicle sensors 108. For example, the safety controls may receive proximity sensor information, camera information, other information, or a combination thereof and may generate a safety signal that indicates to the VPC 102 to perform one or more safety operations. For example, in the case of a lead vehicle coming to a sudden stop, the safety controls may generate a safety signal, based on proximity information from the vehicle sensors 108, indicating to the VPC 102 to immediately bring the vehicle 10 to a complete stop. In some embodiments, the VPC 102 may determine whether to apply the desired vehicle speed set by the operator using the HMI controls 104 based on the signal from the safety controls. For example, the operator may increase the desired vehicle speed, which may bring the vehicle 10 closer to the lead vehicle (e.g., the vehicle 10 would travel faster than the lead vehicle if the desired vehicle speed were achieved). The VPC 102 may determine not to apply the desired vehicle speed, and instead may provide an indication to the display 122 indicating to the operator that increasing the desired vehicle speed may be unsafe or the VPC 102 may ignore the increase in the desired vehicle speed. In some embodiments, the VPC 102 may be in communication with a transmission controller module (TCM). The VPC 102 may receive information from the TCM (e.g., an automatically selected gear) and may determine and/or adjust the total torque demand based on the information received from the TCM.

In some embodiments, the system 100 includes a personal computing device 150. The personal computing device 150 may include any suitable computing device, such as a mobile computing device (e.g., smart phone, tablet, laptop, and the like), or any other suitable computing device. The personal computing device 150 may include at least one processor and at least one memory. The at least one memory may include instructions that, when executed by the at least one processor, cause the processor to perform various functions, such as those described herein,

The personal computing device 150 may be configured to receive various input information, such as vehicle input information, vehicle starting location, vehicle desired destination, route characteristic information, energy cost information, operator labor cost information, other suitable input information, or any combination thereof. The personal computing device 150 is configured to determine a plurality of routes corresponding to the starting location and the desired destination location and provide the plurality of routes as selectable options to the operator of the vehicle 10. The plurality of routes may include additional information, such as a total route distance, a total route driving time, a total route energy cost, a total route labor cost, other suitable information, or a combination thereof, as will be described. While personal computing device 150 is described as being configured to generate the plurality of routes and provide the plurality of routes to the operator of the vehicle, the PAC 124 may be configured to generate the plurality of routes and provide the plurality of routes to the operator, the personal computing device 150 may cooperatively operate with the PAC 124 to receive the various input information and to generate the plurality of routes, or any other suitable computing device, vehicle component, or any combination thereof may receive the various inputs and provide the plurality of routes to the operator.

In some embodiments, the personal computing device 150 receives route characteristics (e.g., road grade characteristics, route distance, and route directions), vehicle parameters, traffic characteristics, weather characteristics, vehicle-to-vehicle parameters, other information or characteristics, or a combination thereof. The personal computing device 150 may receive at least some of the route characteristics from a mapping characteristics module based on location information from the GPS antenna 126. The mapping characteristics module may be disposed within the vehicle 10 (e.g., within the system 100) or may be disposed on a remote computing device, such as the remote computing device 132. In some embodiments, the mapping characteristics module or other suitable module may be disposed on the personal computing device 150. The GPS antenna 126 may be disposed within the vehicle 10 or within the personal computing device 150 and may capture various global positioning signals from various global positioning satellites or other mechanisms. The GPS antenna 126 may communicate the captured signals to the mapping characteristics module. The mapping characteristics module may generate the route characteristics based on the signals received from the GPS antenna 126 or based on route characteristic information provided by the operator. For example, the personal computing device 150 may receive route characteristics corresponding to the starting location (e.g., or current location) of the vehicle 10 and a desired destination location of the vehicle 10. The route characteristics may include a route distance, route directions, road grade information of the route, other route characteristics, or a combination thereof. The personal computing device 150 may receive the route characteristics from the remote computing device 132. In some embodiments, the PAC 124 may receive traffic signal location information, traffic stop sign location information, posted speed limit information, lane shift information, other route characteristics or information, or a combination thereof, from the mapping characteristics module based on location information from the GPS antenna 126. The PAC 124 may communicate the information to the personal computing device 150.

The personal computing device 150 may receive at least some of the route characteristics from the ADAS modules 128. The ADAS modules 128 may assist the operator of the vehicle 10 to improve safety. The ADAS modules 128 may be configured to automate and/or adapt and enhance vehicle systems for safety and better driving. The ADAS modules 128 may be configured to alert the operator of the vehicle 10 of upcoming traffic conditions or disabled vehicles and/or to alert the vehicle 10 of a vehicle proximate to the vehicle 10 in order to avoid collisions and accidents. Further, the ADAS modules 128 may autonomously avoid collisions by implementing safeguards and taking over control of the vehicle 10, such as, by automatic lighting, initiating adaptive cruise control (e.g., via the VPC 102) and collision avoidance (e.g., by controlling a trajectory of the vehicle 10 or bringing the vehicle 10 to a complete stop either using the VPC 102 or directly using the brake controller 112). The PAC 124 may receive information, such as traffic characteristics, vehicle proximity information, disabled vehicle information, other suitable information, or a combination thereof, from the ADAS modules 128 and communicate the received route characteristics to the personal computing device 150. In some embodiments, the personal computing device 150 may omit receiving route characteristics from the ADAS modules 128.

The personal computing device 150 may receive, at least, some of the route characteristics from the V2X communication module 130. The V2X communication module 130 is configured to communicate with other systems proximate or remotely located from the vehicle 10, as described, to obtain, and share information, such as, traffic information, vehicle speed information, construction information, other information, or a combination thereof. The PAC 124 may receive other vehicle speed information, other vehicle location information, other traffic information, construction information, other suitable information, or a combination thereof, from the V2X communication module 130 and may communicate the information to personal computing device 150. In some embodiments, the personal computing device 150 may omit receiving the route characteristics from the V2X communication module 130.

The personal computing device 150 may receive further vehicle parameters from the vehicle sensors 108. For example, the vehicle sensors 108 may include an energy level sensor (e.g., a fuel level sensor or a battery charge sensor), an oil sensor, a speed sensor, a weight sensor, other suitable sensors, or a combination thereof. The PAC 124 may receive an energy level of the vehicle 10, a current weight of the vehicle 10, an oil condition of the vehicle 10, tire inflation information of the vehicle 10, a current vehicle speed, engine temperature information, other suitable vehicle parameters of the vehicle 10, or a combination thereof from the vehicle sensors 108 and may communicate the received information to the personal computing device 150. In some embodiments, the vehicle sensors 108 may include weather sensors, such as, a precipitation sensor or moisture sensor, a barometric pressure sensor, an ambient temperature sensor, other suitable sensors, or a combination thereof. The PAC 124 may receive current weather information, such as precipitation information, barometric pressure information, ambient temperature information, other suitable weather information, or a combination thereof, from the vehicle sensors 108 and may communicate the received information to the personal computing device 150. In some embodiments, the personal computing device 150 may omit receiving information from the vehicle sensors 108.

The personal computing device 150 may receive, at least, some of the route characteristics from the remote computing device 132. For example, the personal computing device 150 may receive information regarding route distance, route directions, road grade information of the route, traffic information, construction information, other vehicle location information, other vehicle speed information, vehicle maintenance information of the vehicle 10, other route characteristics, or a combination thereof, from the remote computing device 132. Additionally, or alternatively, the personal computing device 150 may receive vehicle parameters from the remote computing device 132, such as, a make of the vehicle 10, model of the vehicle 10, propulsion configuration of the vehicle 10, manufacturer provided energy consumption efficiency of the vehicle 10, a weight of the vehicle 10, other vehicle parameters, or a combination thereof. In some embodiments, the personal computing device 150 may receive traffic signal location information, traffic stop sign location information, posted speed limit information, lane shift information, other route characteristics or information, or a combination thereof, from the remote computing device 132. The remote computing device 132 may include any suitable computing device or devices, such as a cloud computing device or system, a remotely located server or servers, a remotely or proximately located mobile computing device or application server that provides information to the personal computing device 150. The remote computing device 132 is remotely located from the vehicle 10, such as in a datacenter or other suitable location.

In some embodiments, the personal computing device 150 may receive energy cost information from the remote computing device 132. For example, the personal computing device 150 may communicate with the remote computing device 132 to obtain or receive a current per gallon price of fuel and/or a price per unit of electricity (e.g., average price in an area proximate the vehicle 10, such as near a location of the vehicle 10 or near a home location of the vehicle 10). In some embodiments, the operator may provide the current per gallon price of fuel and/or the price per unit of electricity (e.g., a price of fuel and/or electricity most recently paid by the operator or a typical per gallon price and/or the price per unit of electricity in the area proximate the operator's area of travel) to the personal computing device 150.

The personal computing device 150 may receive route characteristics, vehicle parameters, and/or energy cost information from an operator of the vehicle 10. For example, the operator may interact with an interface of the personal computing device 150, such as using the a display of the personal computing device 150 or using the display 122 of the vehicle, to provide vehicle parameters of the vehicle 10, such as, vehicle weight, vehicle make and model, vehicle age, vehicle maintenance information, vehicle identification number, a number of passengers, load information (e.g., an amount of luggage or other load information), other vehicle parameters, or a combination thereof. Additionally, or alternatively, the operator may provide route characteristics, such as a route map, route distance, other route characteristics, or a combination thereof, to the personal computing device 150. In some embodiments, the personal computing device 150 learns behavior of the operator of the vehicle 10. For example, the personal computing device 150monitors the operator's vehicle speed relative to posted speed limits. In some embodiments, the operator may provide a labor cost associated with the operator. For example, the operator may provide the operator's hourly wage or salary. Additionally, or alternatively, the operator may provide a personal value of time or other suitable representation of per unit time cost. As will be described, the personal computing device 150 may determine a time cost for a route of the vehicle 10 using the operator's labor cost.

In some embodiments, the personal computing device 150 may learn traffic patterns for known routes traversed by the vehicle 10. For example, the PAC 124 may track traffic conditions while the vehicle 10 traverses one or more routes on a routine or regular basis. The personal computing device 150 may determine traffic patterns for the routes based on the monitored traffic conditions. In some embodiments, the personal computing device 150 receives traffic patterns for a route the vehicle 10 is traversing from the remote computing device 132, or from the mapping characteristics module based on the signals from the GPS antenna 126, as described

It should be understood that the personal computing device 150 may receive any characteristics or information associated with routes, traffic, signage and signals, other vehicles, vehicle parameters of the vehicle 10, any other suitable characteristics or information, including those described or not described here, from any of the components described or not described herein. Additionally, or alternatively, the personal computing device 150 may be configured to learn any suitable characteristics or information described or not described herein.

Typically, vehicles, such as the vehicle 10, include an infotainment system, such as a vehicle infotainment system 160 (e.g., integrated into the vehicle dash, an application on a mobile computing device, or a combination thereof). The infotainment system 160 may be configured to provide infotainment services, such as navigation services, entertainment services (e.g., movie or music playback, access to the Internet, and so on), or other suitable infotainment servicers. The infotainment system 160 may be configured to display the infotainment services to the display 122 or other suitable display within the vehicle 10.

In some embodiments, the infotainment system 160 may be configured to provide the operator of the vehicle 10 with the ability to select between route alternatives for a desired destination location (e.g., a destination the operator of the vehicle 10 provides to the infotainment system 160 or the personal computing device 150 as an input). Such route alternatives are typically displayed with a travel time and/or a travel distance, such that, the operator of the vehicle 10 may select a route based on how long it will take to traverse the route, the total traversable distance of the route, or a combination of both. Additionally, or alternatively, the operator of the vehicle 10 may be able to provide preference information, such that the personal computing device 150 may provide route alternatives based on the preferences (e.g., to avoid toll roads, use highways where available, and the like). In some embodiments, the personal computing device 150 may communicate with the infotainment system 160 and may provide the route alternatives to the operator using the infotainment system 160, the display of the personal computing device 150, or a combination thereof.

However, such typical navigation systems do not allow the operator of the vehicle 10 to select a route based on a cost (e.g., fuel cost, electricity cost, time cost, total cost, or other suitable costs) associated with the route. Accordingly, in some embodiments, the personal computing device 150 and/or the PAC 124 may be configured to provide a plurality of routes for a destination (e.g., provided by the operator of the vehicle 10) that include total cost information, energy consumption information, or a combination thereof, for each route of the plurality of routes.

For example, the personal computing device 150 may receive a destination input from the operator of the vehicle 10. As described, the operator of the vehicle 10 may access an application on personal computing device 150 to provide various input information and/or may receive the various inputs from the various components of the vehicle 10 described herein. For example, the operator may provide a starting location and a destination location to the application on the personal computing device 150. The personal computing device 150 may communicate with components of the vehicle 10 described herein to receive vehicle information, route information, other suitable information, or a combination thereof. In some embodiments, the personal computing device 150 may receive the input information and communicate with the remote computing device 132 to receive the various vehicle information, route information, other suitable information, or a combination thereof (e.g. the personal computing device 150 may be disconnected from the various components of the vehicle 10).

The personal computing device 150, as described, communicates with the mapping characteristics module and may provide the destination input to the mapping characteristics module. The mapping characteristics module may return a plurality of routes between a current location of the vehicle 10 or a provided starting location of the vehicle 10 and the destination. The plurality of routes may include route characteristics, such as a travel time and a travel distance for each route of the plurality of routes. In some embodiments, the personal computing device 150 may receive route information from the remote computing device 132, as described, and may generate the plurality of routes based on the route information.

The personal computing device 150 may receive vehicle parameters of the vehicle 10, as described. For example, the operator of the vehicle 10 may provide the vehicle parameters during a setup or installation of the application on the personal computing device 150. The personal computing device 150 may receive route characteristics (e.g., including road grades, traffic, speed limits, stop signs, traffic signals, other route characteristics, or a combination thereof), as described, for each of the plurality of routes. The personal computing device 150 is configured to generate an energy consumption profile for the vehicle 10, as described. For example, the energy consumption profile may be generated using the information described above and may indicate an optimum energy consumption of the vehicle 10 for various route characteristics, such as road grades, traffic, speed limits, stop signs, traffic signals, other route characteristics, or a combination thereof.

The personal computing device 150 may use the energy consumption profile for the vehicle 10 to generate an energy consumption for each route of the plurality of routes. For example, the personal computing device 150 may apply the energy consumption profile to the particular route characteristics for each route of the plurality of routes to generate an energy consumption for the respective routes.

The personal computing device 150 may determine an energy cost for each route of the plurality of routes. For example, when the vehicle 10 uses fuel, such as gasoline, diesel, or other suitable fuel, to propel the vehicle 10, as described, the energy cost may include a fuel cost. The personal computing device 150 may determine the fuel cost for a respective route of the plurality of routes, by determining a product of the energy consumption for the respective route and the current cost per unit of fuel. When the vehicle 10 includes an electric vehicle, the energy cost may include an electricity cost. The personal computing device 150 may determine the electricity cost for a respective route of the plurality of routes, by determining a product of the energy consumption for the respective route and the current cost per unit of electricity. When the vehicle 10 includes a hybrid vehicle, the energy cost may include a fuel cost and an electricity cost. The personal computing device 150 may determine, for a respective route of the plurality of routes, the fuel cost, and the electricity cost. The personal computing device 150 may determine the energy cost for the respective route by determining a sum of the fuel cost and the electricity cost for the respective route.

In some embodiments, the personal computing device 150 determines a time cost for each route of the plurality of routes. For example, the personal computing device 150 determines the time cost for a respective route of the plurality of routes by determining a product between a travel time for the respective route and the operator's labor cost (e.g., provided by the operator of the vehicle 10). The time cost may represent an opportunity cost associated with traversing the respective route instead of earning the operator's hourly wage or salary.

In some embodiments, the personal computing device 150 may determine a total cost for each route of the plurality of routes. For example, the personal computing device 150 may determine a total cost for a respective route of the plurality of routes by determining a sum of the energy cost and the time cost for the respective route.

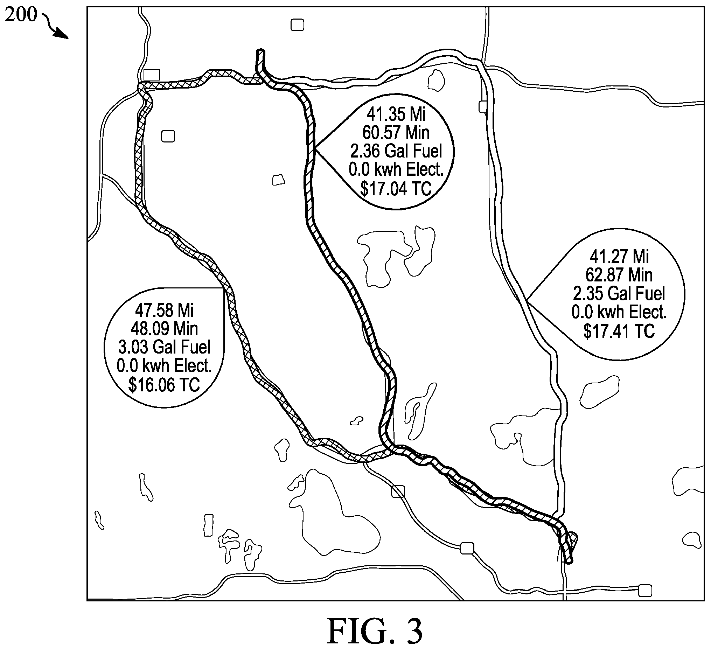

The personal computing device 150 may output the plurality of routes, including a travel distance, a travel time, a generated energy consumption, an energy cost, a time cost, and/or a total cost for each route of the plurality of routes. FIG. 3 generally illustrates a route selection interface 200 according to the principles of the present disclosure. The personal computing device 150 may output the plurality of routes to the route selection interface 200. The route selection interface 200 may be provided to the operator of the vehicle on the display of the personal computing device 150, on the infotainment system 160, or a combination thereof. While only the route selection interface 200 is generally illustrated, it should be understood that the route selection interface 200 is meant as an example interface and that the personal computing device 150 may output the plurality of routes to any suitable interface.

The operator of the vehicle 10 may select a route from the plurality of routes. The personal computing device 150 may receive the selected route. In some embodiments, the personal computing device 150 may generate navigation output and communicate the navigation output to the infotainment system 160 (e.g., or other suitable display device, as described), may provide the navigation output to the display of the personal computing device 150, or a combination thereof. The navigation output may include a portion of the selected route (e.g., a portion of the selected route immediately ahead of the vehicle 10) and instructions for traversing the selected route. The personal computing device 150 may continue to adjust and/or update the navigation output as the vehicle 10 traverses the selected route (e.g., the personal computing device 150 may change the portion of the selected route and the instructions for traversing the selected route as the vehicle 10 traverses the selected route).

In some embodiments, the operator of the vehicle 10 may follow the instructions output by the personal computing device 150 in order to traverse the selected route with the vehicle 10. The personal computing device 150 may monitor route characteristics of the selected route as the vehicle 10 traverses the selected route. The personal computing device 150 may provide feedback to the operator of the vehicle 10 (e.g., using the infotainment system 160, the display of the personal computing device 150, or a combination thereof). The feedback may recommend an alternative route to the operator of the vehicle 10 if, for example, the route characteristics indicate that traffic has increased on the selected route, an accident occurred on the selected route, or other significant changes to route characteristics of the selected route occurred.

In some embodiments, the operator of the vehicle 10 may provide route selection preferences to the personal computing device 150. For example, the operator may indicate, a preference for routes having a lower total cost, a lower energy cost, a lower time cost, a lower energy consumption, a shorter travel time, a shorter distance, or any combination thereof. The personal computing device 150 may output the plurality of routes according to the operator's preferences. Additionally, or alternatively, the personal computing device 150 may automatically select a route of the plurality of routes based on the operator's preferences.

In some embodiments, the personal computing device 150 may perform the methods described herein, such as the method 300 and the method 400. However, the methods described herein as performed by the personal computing device are not meant to be limiting, and any type of software executed on a controller can perform the methods described herein without departing from the scope of this disclosure. For example, a controller, such as a processor executing software within a computing device onboard the vehicle 10, can perform the methods described herein.

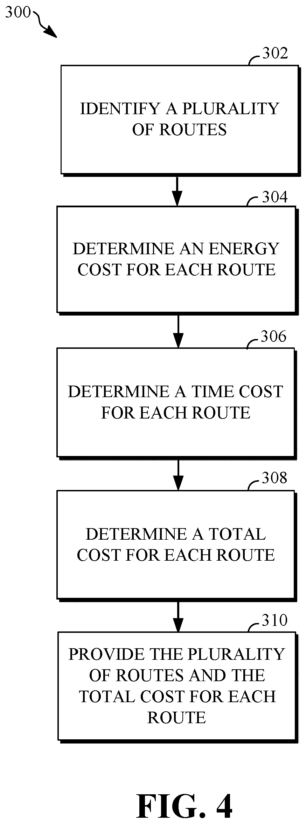

FIG. 4 is a flow diagram generally illustrating a vehicle route selection method 300 according to the principles of the present disclosure. At 302, the method 300 identifies a plurality of routes. For example, the personal computing device 150 may identify the plurality of routes using a current location or a starting location of the vehicle and a desired destination. The personal computing device 150 may receive route information from any component or source described herein. At 304, the method 300 determines an energy cost for each route. For example, the personal computing device 150 may determine the energy cost for a respective route of the plurality of routes by determining a product of the energy consumption for the respective route and a current price per unit of energy (e.g., current price per unit of fuel, current price per unit of electricity, or a combination thereof). The personal computing device 150 determines the energy cost for each respective route. At 306, the method 300 determines a time cost for each route. For example, the personal computing device 150 may determine a time cost for the respective route by determining a product of the travel time for the respective route and the operator's labor cost or other suitable value of time. The personal computing device 150 determines the time cost for each respective route.

At 308, the method 300 determines a total cost for each route. For example, the personal computing device 150 may determine a total cost for the respective route by determining a sum of the energy cost for the respective route and the time cost for the respective route. The personal computing device 150 determines the total cost for each respective route. At 310, the method 300 provides the plurality of routes and the total cost for each route. For example, the personal computing device 150 provides, to the operator of the vehicle using any suitable display, the plurality of routes and the total cost for each respective route. In some embodiments, the personal computing device 150 provides the plurality of routes, the travel time for each respective route, the fuel energy consumption for each respective route, the electrical energy consumption for each respective route, the travel distance for each respective route, the total energy consumption for each respective route, the total energy cost for each respective route or fuel cost for each respective route and the electricity cost for each respective route, the time cost for each respective route, the total cost for each respective route, or any suitable combination thereof.

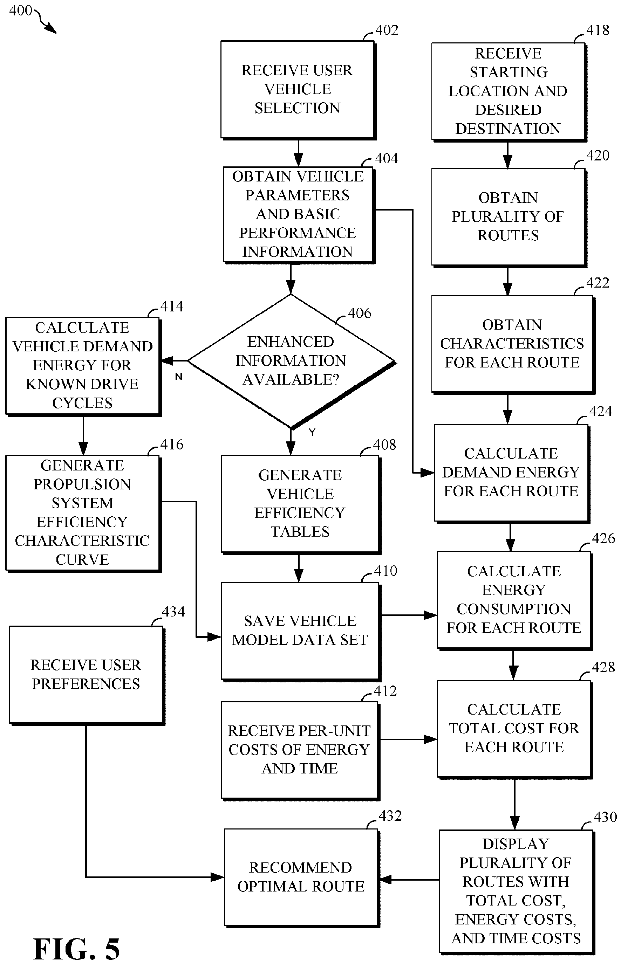

FIG. 5 is a flow diagram generally illustrating a vehicle route selection method 400 according to the principles of the present disclosure. At 402, the method 400 receives a user vehicle selection. For example, the personal computing device 150 may receive input from a user, such as the operator of the vehicle 10. The input may include a vehicle selected from a list of known vehicles. The input may also include vehicle parameters for a vehicle that is not on the list of known vehicles. At 404, the method 400 obtains vehicle parameters and basic performance information. For example, the personal computing device 150 obtains vehicle parameters and basic performance characteristics from a database and stores this information in a user-specific database in the personal computing device 150, the infotainment system 160, and/or the remote computing device 132. Vehicle parameters may include information such as vehicle mass, rolling resistance, viscous and aerodynamic drag coefficients, and the like. The basic performance information may include fuel economy performance and electricity consumption on standard vehicle drive cycles.

At 406, the method 400 determines whether enhanced information is available to supplement the basic information. If enhanced information is available, the method 400 generates vehicle efficiency tables at 408. If no enhanced information is available, the method 400 calculates vehicle demand energy for known drive cycles at 414 based on the vehicle parameters and basic performance information. At 416, the method 400, using the personal computing device 150, generates a propulsion system efficiency curve based on the vehicle demand energy for known drive cycles and the basic performance information. At 410, the method 400, using the personal computing device 150, generates a vehicle performance model based on the characteristic curve and/or the efficiency tables.

At 434, the method 400 receives input from the user, via the personal computing device 150 and/or the infotainment system 106. The input may include user preferences for recommendation of an optimal route based on total cost, energy cost, time cost, energy consumed, fuel consumed, electricity consumed, or combination thereof. At 412, the method 400 receives per-unit costs of energy and time. For example, the personal computing device 150 receives, from the user, input indicating per-unit costs of energy (fuel and/or electricity) and cost of time.

At 418, the method 400, using the personal computing device 150 and/or the infotainment system 160, provides a user interface for selecting the starting point and destination of the route. The method 400 then obtains a plurality of route options at 420 from a remote computing device, such as the remote computing device 132. At 422, the method 400, using the personal computing device 150, further obtains characteristics of each of the plurality of routes from the remote computing device 132. The route characteristics may include, for example, speed limits, road grade, locations of traffic control features such as traffic lights, stop signs, yield signs, localized speed reduction zones, current traffic conditions, expected travel time, other characteristics, or a combination thereof, and the like. The method 400 calculates the energy required (vehicle demand energy) at 424 for the vehicle 10 to complete each of the plurality of routes using the vehicle parameter information.

At 426, the method 400, using the personal computing device 150, then calculates the fuel and/or electrical energy consumption of each of the plurality of optional routes. At 428, the method 400, using the personal computing device 150, calculates the fuel cost, electricity cost, energy cost, time cost, and total cost of each of the plurality of optional routes. At 430, the method 400, using the personal computing device 150 and/or the infotainment system 160, may display information regarding the fuel consumption, electricity consumption, energy consumption, travel time, fuel cost, electricity cost, energy cost, time cost, and total cost for each of the plurality of routes to the user. Additionally, or alternatively, an optimal route may be recommended at 432 based on the user preferences.

In some embodiments, a method for vehicle route selection includes identifying a plurality of routes based on a current location of a vehicle and a destination location. The method also includes determining an energy cost for each of the plurality of routes. The method also includes determining a time cost for each of the plurality of routes. The method also includes determining a total cost for each of the plurality of routes using the energy cost and the time cost for each respective route of the plurality of routes. The method also includes providing, to an occupant of the vehicle, the plurality of routes and the total cost for each respective route of the plurality of routes.

In some embodiments, the energy cost includes at least one of a fuel cost and an electricity cost. In some embodiments, the fuel cost for a respective route of the plurality of routes includes a product of a quantity of fuel to be consumed by the vehicle for the respective route and a cost per unit of fuel. In some embodiments, the electricity cost for a respective route of the plurality of routes includes a product of units of electricity to be consumed by the vehicle for the respective route and a cost per unit of electricity. In some embodiments, the energy cost is based on, at least, a vehicle energy consumption profile that is determined based on at least one vehicle characteristic that contributes to vehicle energy consumption. In some embodiments, the time cost for a respective route of the plurality of routes includes a product of a travel time of the respective route and a cost of time of the occupant of the vehicle. The cost of time may include a labor rate of the occupant of the vehicle or other suitable value of time. The starting location may include a current location of the vehicle.

In some embodiments, a vehicle route selection apparatus includes a memory and a processor. The memory includes instructions executable by the processor to: identify a plurality of routes based on a current location of a vehicle and a destination location; determine an energy cost for each of the plurality of routes; determine a time cost for each of the plurality of routes; determine a total cost for each of the plurality of routes using the energy cost and the time cost for each respective route of the plurality of routes; and provide, to an occupant of the vehicle, the plurality of routes and the total cost for each respective route of the plurality of routes.

In some embodiments, the energy cost includes at least one of a fuel cost and an electricity cost. In some embodiments, the fuel cost for a respective route of the plurality of routes includes a product of a quantity of fuel to be consumed by the vehicle for the respective route and a cost per unit of fuel. In some embodiments, the electricity cost for a respective route of the plurality of routes includes a product of units of electricity to be consumed by the vehicle for the respective route and a cost per unit of electricity. In some embodiments, the energy cost is based on, at least, a vehicle energy consumption profile that is determined based on at least one vehicle characteristic that contributes to vehicle energy consumption. In some embodiments, the time cost for a respective route of the plurality of routes includes a product of a travel time of the respective route and a labor rate or other suitable value of time of the occupant of the vehicle.

In some embodiments, a non-transitory computer-readable storage medium, comprising executable instructions that, when executed by a processor, facilitate performance of operations, including: identifying a plurality of routes based on a current location of a vehicle and a destination location; determining an energy cost for each of the plurality of routes; determining a time cost for each of the plurality of routes; determining a total cost for each of the plurality of routes using the energy cost and the time cost for each respective route of the plurality of routes; and providing, to an occupant of the vehicle, the plurality of routes, the time cost for each respective route of the plurality of routes, and at least one route characteristic for each respective route of the plurality of routes.

In some embodiments, the energy cost includes at least one of a fuel cost and an electricity cost. In some embodiments, the fuel cost for a respective route of the plurality of routes includes a product of a quantity of fuel to be consumed by the vehicle for the respective route and a cost per unit of fuel. In some embodiments, the electricity cost for a respective route of the plurality of routes includes a product of units of electricity to be consumed by the vehicle for the respective route and a cost per unit of electricity. In some embodiments, the energy cost is based on, at least, a vehicle energy consumption profile that is determined based on at least one vehicle characteristic that contributes to vehicle energy consumption. In some embodiments, the time cost for a respective route of the plurality of routes includes a product of a travel time of the respective route and a labor rate or other suitable value of time of the occupant of the vehicle. In some embodiments, the at least one route characteristic includes at least one of a travel time for each respective route of the plurality of routes and a travel distance for each respective route of the plurality of routes. In some embodiments, the occupant of the vehicle selects a route of the plurality of routes based on one of the time cost for the route and the at least one route characteristic for the route.

In some embodiments, the various outputs of the method 300 and/or the method 400 calculated on the plurality of routes are provided to a dispatcher, fleet coordinator, or other person of authority who selects the route on behalf of the vehicle operator who will then drive the route.

In another embodiment, the various outputs of the method 300 and/or the method 400 calculated on the plurality of routes are compared to the route selection preferences that are provided by a dispatcher, fleet coordinator, or other person of authority and a recommended route is automatically provided to the vehicle operator, based on the selection preferences.

The above discussion is meant to be illustrative of the principles and various embodiments of the present invention. Numerous variations and modifications will become apparent to those skilled in the art once the above disclosure is fully appreciated. It is intended that the following claims be interpreted to embrace all such variations and modifications.

The word "example" is used herein to mean serving as an example, instance, or illustration. Any aspect or design described herein as "example" is not necessarily to be construed as preferred or advantageous over other aspects or designs. Rather, use of the word "example" is intended to present concepts in a concrete fashion. As used in this application, the term "or" is intended to mean an inclusive "or" rather than an exclusive "or." That is, unless specified otherwise, or clear from context, "X includes A or B" is intended to mean any of the natural inclusive permutations. That is, if X includes A; X includes B; or X includes both A and B, then "X includes A or B" is satisfied under any of the foregoing instances. In addition, the articles "a" and "an" as used in this application and the appended claims should generally be construed to mean "one or more" unless specified otherwise or clear from context to be directed to a singular form. Moreover, use of the term "an implementation" or "one implementation" throughout is not intended to mean the same embodiment or implementation unless described as such.

Implementations the systems, algorithms, methods, instructions, etc., described herein can be realized in hardware, software, or any combination thereof. The hardware can include, for example, computers, intellectual property (IP) cores, application-specific integrated circuits (ASICs), programmable logic arrays, optical processors, programmable logic controllers, microcode, microcontrollers, servers, microprocessors, digital signal processors, or any other suitable circuit. In the claims, the term "processor" should be understood as encompassing any of the foregoing hardware, either singly or in combination. The terms "signal" and "data" are used interchangeably.

As used herein, the term module can include a packaged functional hardware unit designed for use with other components, a set of instructions executable by a controller (e.g., a processor executing software or firmware), processing circuitry configured to perform a particular function, and a self-contained hardware or software component that interfaces with a larger system. For example, a module can include an application specific integrated circuit (ASIC), a Field Programmable Gate Array (FPGA), a circuit, digital logic circuit, an analog circuit, a combination of discrete circuits, gates, and other types of hardware or combination thereof. In other embodiments, a module can include memory that stores instructions executable by a controller to implement a feature of the module.

Further, in one aspect, for example, systems described herein can be implemented using a general-purpose computer or general-purpose processor with a computer program that, when executed, carries out any of the respective methods, algorithms, and/or instructions described herein. In addition, or alternatively, for example, a special purpose computer/processor can be utilized which can contain other hardware for carrying out any of the methods, algorithms, or instructions described herein.

Further, all or a portion of implementations of the present disclosure can take the form of a computer program product accessible from, for example, a computer-usable or computer-readable medium. A computer-usable or computer-readable medium can be any device that can, for example, tangibly contain, store, communicate, or transport the program for use by or in connection with any processor. The medium can be, for example, an electronic, magnetic, optical, electromagnetic, or a semiconductor device. Other suitable mediums are also available.

The above-described embodiments, implementations, and aspects have been described in order to allow easy understanding of the present invention and do not limit the present invention. On the contrary, the invention is intended to cover various modifications and equivalent arrangements included within the scope of the appended claims, which scope is to be accorded the broadest interpretation to encompass all such modifications and equivalent structure as is permitted under the law.

## Claims

1. A method (300, 400) for vehicle route selection, the method comprising:
identifying (302, 420) a plurality of routes based on a starting location of a vehicle and a destination location;
determining (304) an energy cost for each of the plurality of routes;
determining (306) a time cost for each of the plurality of routes;
determining (308, 428) a total cost for each of the plurality of routes using the energy cost and the time cost for each respective route of the plurality of routes; and
providing (310, 430), to an occupant of the vehicle, the plurality of routes and the total cost for each respective route of the plurality of routes.

2. The method (300, 400) of claim 1, wherein the energy cost includes at least one of a fuel cost and an electricity cost.

3. The method (300, 400) of claim 2, wherein the fuel cost for a respective route of the plurality of routes includes a product of a quantity of fuel to be consumed by the vehicle for the respective route and a cost per unit of fuel.

4. The method (300, 400) of claim 2, wherein the electricity cost for a respective route of the plurality of routes includes a product of units of electricity to be consumed by the vehicle for the respective route and a cost per unit of electricity.

5. The method (300, 400) of claim 1, wherein the energy cost is based on, at least, a vehicle energy consumption profile that is determined based on at least one vehicle characteristic that contributes to vehicle energy consumption.

6. The method (300, 400) of claim 1, wherein the time cost for a respective route of the plurality of routes includes a product of a travel time of the respective route and a cost of time of the occupant of the vehicle.

7. A vehicle route selection apparatus (150) comprising:
a memory; and
a processor, wherein the memory includes instructions executable by the processor to:
identify (302, 420) a plurality of routes based on a starting location of a vehicle and a destination location;
determine (304) an energy cost for each of the plurality of routes;
determine (306) a time cost for each of the plurality of routes;
determine (308, 428) a total cost for each of the plurality of routes using the energy cost and the time cost for each respective route of the plurality of routes; and
provide (310, 430), to an occupant of the vehicle, the plurality of routes and the total cost for each respective route of the plurality of routes.

8. The apparatus (150) of claim 7, wherein the energy cost includes at least one of a fuel cost and an electricity cost.

9. The apparatus (150) of claim 8, wherein the fuel cost for a respective route of the plurality of routes includes a product of a quantity of fuel to be consumed by the vehicle for the respective route and a cost per unit of fuel.

10. The apparatus (150) of claim 8, wherein the electricity cost for a respective route of the plurality of routes includes a product of units of electricity to be consumed by the vehicle for the respective route and a cost per unit of electricity.

11. The apparatus (150) of claim 7, wherein the energy cost is based on, at least, a vehicle energy consumption profile that is determined based on at least one vehicle characteristic that contributes to vehicle energy consumption.

12. The apparatus (150) of claim 7, wherein the time cost for a respective route of the plurality of routes includes a product of a travel time of the respective route and a cost of time of the occupant of the vehicle.

13. A non-transitory computer-readable storage medium, comprising executable instructions that, when executed by a processor, facilitate performance of operations of the methods of any of claims 1 to , comprising any of methods 1 to 6.
